(19) Europäisches Patentamt / European Patent Office / Office européen des brevets

(11) **EP 1 926 321 A1**

(12) **EUROPEAN PATENT APPLICATION**

(43) Date of publication:
    **28.05.2008 Bulletin 2008/22**

(51) Int Cl.:
    **H04N 7/26** (2006.01)

(21) Application number: **06024537.0**

(22) Date of filing: **27.11.2006**

(84) Designated Contracting States:
    **AT BE BG CH CY CZ DE DK EE ES FI FR GB GR
    HU IE IS IT LI LT LU LV MC NL PL PT RO SE SI
    SK TR**
    Designated Extension States:
    **AL BA HR MK RS**

(71) Applicant: **Matsushita Electric Industrial Co., Ltd.
    Kadoma-shi
    Osaka 571-8501 (JP)**

(72) Inventors:
  • **Wedi, Thomas, Dr.
    Monzastrasse, 04C
    63225 Langen (DE)**
  • **Knicker, Florian
    Monzastrasse, 04C
    63225 Langen (DE)**

(74) Representative: **Grünecker, Kinkeldey,
    Stockmair & Schwanhäusser
    Anwaltssozietät
    Leopoldstrasse 4
    80802 München (DE)**

(54) **Hybrid texture representation**

(57)     The present invention relates to a hybrid method for texture representation and, in particular, to image and video data compression based on this method and corresponding encoder and decoder apparatuses. An input signal is separated in the frequency domain into two sub-band components. The low-frequency component is encoded faithfully by means of a conventional image/video encoder. The high-frequency component, on the other hand, is analyzed so as to compute representative texture parameters. Instead of faithfully encoding the high-frequency component, only the computed texture parameters are stored or transmitted. Upon decoding, the low-frequency component is reconstructed, whereas the high-frequency component is replaced by a similar-looking texture that has been synthesized in accordance with the texture parameters. Both the reconstructed low-frequency component and the synthesized high-frequency component are then merged in order to generate the output signal.

Fig. 4

## Description

The present invention relates to a method and a corresponding apparatus for encoding and decoding image and video data, and in particular to a hybrid approach based on texture synthesis and image data representation.

## BACKGROUND OF THE INVENTION

Most conventional image and video compression methods aim at a faithful representation of the original data in terms of an objective quality measure such as the mean square error. Data compression is achieved by means of entropy coding techniques and - in case of lossy compression methods - by removing sub-band information that cannot be perceived by the human observer.

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H. 264/MPEG-4 AVC.

The encoding approach underlying most of these standards consists of the following main stages:

(i) Dividing each individual video frame into 2-dimensional blocks of pixels in order to subject each video frame to data compression at a block level.

(ii) Decorrelating spatiotemporal video information by applying a temporal prediction scheme to each block and by transforming the residual prediction error from the spatial domain into the frequency domain.

(iii) Reducing the overall amount of data by quantizing the resulting transform coefficients.

(iv) Compressing the remaining data by entropy encoding the quantized transform coefficients.

It is a particular approach of current video coding standards that the image information is transformed from the spatial domain into the frequency domain. Image compression is achieved by representing the image content by only a few frequency components. A natural image content is mostly concentrated in the coefficients of the lower frequency domain. Higher frequency parts, for which the human visual system is less sensitive anyway, can thus be removed or quantized in order to lower the amount of data to be coded.

This approach fails for images exhibiting a quasi-irregular arrangement of fine details, such as grass, leaves, gravel, waves, etc. For faithfully representing the irregularity inherent to these structures, almost all sub-bands of the image data are equally important and thwart efficient data compression. Conventional compression methods can thus compress irregular patterns only with a substantial loss of coding quality, i.e., with overt coding artifacts.

An alternative approach is pursued by methods collectively termed "texture synthesis", which aim at generating image data that is *subjectively* similar to a sample of a more or less irregular pattern or *texture.* The appealing aspect of texture synthesis is that an arbitrary amount of "texture" can be generated from the sample without artifacts such as seams or overt repetitions. Texture synthesis has thus found a wide scope of applications ranging from photo retouching to texture mapping in 3d computer graphics.

There are also attempts (see e.g. A. Dumitras and B. G. Haskell, An encoderdecoder texture replacement method with application to content-based movie coding, IEEE Trans. Circuits Syst. Video Technol., Vol. 14, pp. 825-840, 2004; and P. Ndjiki-Nya, et al., Improved H.264 coding using texture analysis and synthesis, Proc Icip 2003, Vol. 3, pp. 849-852, 2003) to employ texture synthesis in video coding, wherein video images are segmented into regions with salient image objects and regions containing subjectively unimportant details. Whereas salient image objects are encoded conventionally, patterns with subjectively unimportant details are replaced by a similar texture that can be described by a small amount of texture synthesis parameters, so that only these parameters have to be coded and transmitted to the decoder. In this manner, bandwidth-consuming description of irregular patterns is shifted to a semantic, content-oriented coding scheme that refrains from describing shape and position of each individual blade of grass, leaf, or pebble stone in favor of conveying the subjectively relevant information "grass", "leaves", and "gravel".

Although complex synthesis methods are used in the above coding methods, the subjective impression of the synthesized texture is often un-natural. There is thus a need for improved texture representation methods.

## SUMMARY OF THE INVENTION

The aim of the present invention is to provide an improved texture representation method that can be employed for image and video coding.

This is achieved by the features as set forth in the independent claims.

Preferred embodiments are the subject matter of dependent claims.

It is the particular approach of the present invention to separate the input signal in the frequency domain into a first and a second sub-band signal and to represent only the first sub-band signal by means of a conventional signal representation method, whereas the second sub-band signal is replaced by a synthesized texture. The replacement texture is synthesized from texture parameters that have been adapted so that an output signal composed from the reconstructed first sub-band signal and the synthesized texture is subjectively similar to the original input signal.

According to a first aspect of the present invention, an image encoding method is provided. The method comprises the steps of separating an input image signal into a first image signal and a second image signal, encoding the first image signal into a first bitstream, analyzing the second image signal and computing texture parameters representing a texture of the second image signal, and encoding the texture parameters into a second bitstream, characterized in that said first and second image signal represent two different sub-bands of the input image signal.

According to a further aspect of the present invention, an image encoder is provided. The image encoder comprises a signal separator adapted for separating an input image signal into a first image signal and a second image signal, a first encoder adapted for encoding the first image signal into a first bitstream, a texture analyzer adapted for analyzing the second image signal and computing texture parameters representing a texture of the second image signal, and a second encoder adapted for encoding the texture parameters into a second bitstream, characterized in that said first and second image signal represent two different sub-bands of the input image signal.

According to a further aspect of the present invention, an image decoding method is provided. This method comprises the steps of decoding a first bitstream into a first image signal, decoding a second bitstream into texture parameters representing a texture, synthesizing a texture determined by the texture parameters and generating a second image signal from the synthesized texture, and composing an output image signal from the first image signal and the second image signal, characterized in that said first and second image signal represent two different sub-bands of the output image signal.

According to a further aspect of the present invention, an image decoder is provided. The image decoder comprises a first decoder adapted for decoding a first bitstream into a first image signal, a second decoder adapted for decoding a second bitstream into texture parameters representing a texture, a texture synthesizer adapted for synthesizing a texture determined by the texture parameters and generating a second image signal from the synthesized texture, and a signal composer adapted for composing an output image signal from the first image signal and the second image signal, characterized in that said first and second image signal represent two different sub-bands of the output image signal.

Preferably, the first and the second bitstream are multiplexed into an output bitstream of the encoder, whereas an input bitstream of the decoder is de-multiplexed into the first and the second bitstream. In this manner, the two image signals can easily be transmitted and received via a communications channel or stored to and read from a recording medium.

Preferably, the input image is partitioned at the encoder side into a plurality of blocks, each block consisting of a plurality of pixels, so that each block can be separately analyzed and encoded. Similarly, the output at the decoder side image is assembled from a plurality of blocks, wherein each block has been separately decoded and synthesized. Therefore, complex images containing different textures in different image regions can be represented block-wise. In particular, a plurality of texture parameter sets can be computed independently of each block.

Preferably, the first and the second image signal are generated by filtering the input image signal by two different (spatial) filters, in particular by a low-pass and a high-pass filter, so that the first and the second image signal represent a low-frequency and a high-frequency component of the input image signal, respectively. If the cutoff frequencies of the low-pass and the high-pass filter coincide, then the entire image information can be preserved while separating the input image signal into the first and the second image signal.

Preferably, the first and the second image signal are generated by a sub-band decomposition of the input image, based on one of wavelet transformation, discrete Fourier transformation, and steerable pyramids. Each of these sub-band decomposition methods can be easily implemented and carried out in a particularly efficient manner.

Preferably, the first image signal is encoded and decoded by employing a transform-based image compression and de-compression method, for instance according to the JPEG standard. These methods are known to allow for a highly efficient implementation and further allow for controlling the compression ratio versus coding quality trade-off.

Preferably, statistical properties of the second image signal are employed as the texture parameters for representing the second image signal. Alternatively, a representative sample of the second image signal may be employed for this purpose. Both methods are well known in the art and allow for a synthesis of very realistic and lively textures. In addition, statistical properties describing a relation between the first and the second image signal may be employed to fix the spatial information of the synthesized texture.

According to a further aspect of the present invention, a video encoding method is provided that employs the inventive image encoding method for encoding frames of an input video signal. Moreover, a video encoder is provided that employs the inventive image encoder for encoding frames of an input video signal. In particular, the inventive image encoder is employed for encoding at least one block of at least one I-frame of an input video signal.

According to a further aspect of the present invention, a video decoding method is provided that employs the inventive image decoding method for decoding frames of an input video signal. Moreover, a video decoder is provided that employs the inventive image decoder for decoding frames of an input video signal. In particular, the inventive image decoder is employed for decoding at least one block of at least one I-frame of an encoded input video signal.

Preferably, the first image signal is encoded and decoded by means of a transform-based video compression method, in particular a video compression method according to one of the MPEG coding standards. In this manner, the advantages of well-established transform-based video compression methods can be combined with those of texture synthesis-based representation methods.

The above and other objects and features of the present invention will become more apparent from the following description and preferred embodiments given in conjunction with the accompanying drawings, in which:

Fig. 1    is a schematic drawing illustrating the basic idea of the present invention;

Fig. 2    is a flow chart illustrating a method for texture analysis and synthesis in accordance with an embodiment of the present invention;

Fig. 3    is a schematic drawing illustrating the basic idea of the present invention in an alternative configuration;

Fig. 4    is a schematic drawing illustrating a generalized example for applying the present invention to image and video coding;

Fig. 5    is a schematic drawing illustrating a generalized example for applying the present invention to image and video coding in an alternative configuration;

Fig. 6    is a schematic drawing illustrating a specific example for applying the present invention to video coding;

Fig. 7    is a schematic drawing illustrating a specific example for applying the present invention to video coding in an alternative configuration;

Fig. 8    is a schematic drawing illustrating an application example of the present invention based on steerable pyramids;

Fig. 9    is a schematic drawing illustrating an application example of the present invention based on steerable pyramids in an alternative configuration;

Fig. 10    is a block diagram illustrating a texture synthesizer in accordance with an embodiment of the present invention;

Fig. 11    is a flow chart illustrating a method for image and video coding in accordance with an embodiment of the present invention;

Fig. 12    is a block diagram illustrating a conventional video encoder; and

Fig. 13    is a block diagram illustrating a conventional video decoder.

DETAILED DESCRIPTION

In natural images, neighboring pixels are highly correlated. These correlations are due to a smooth variation of pixel data. Even edges cause (higher order) correlations in the image since they do not abruptly change direction on a length scale defined by the pixel size. These correlations generally reduce the entropy of the image data, a fact that is exploited by conventional image data compression techniques.

An important step in any conventional image data compression method is to find a representation of the image in terms of components that exhibit a lower degree of correlation than pixels in the spatial domain. This is usually achieved by applying an orthogonal transformation, such as a discrete cosine transformation (DCT), so as to transform the original image data into the frequency domain. Different spatial frequency components are mostly independent of each other so that the original image can be faithfully represented by selecting only the most "important" frequency components, e.g., the components with the largest amplitude, thus reducing the overall amount of image data.

This approach fails for images with fine details for two reasons. Firstly, smoothness in the variation of pixel data is lost if the characteristic length scale of the image details approaches the length scale defined by the pixel size, so that correlations between neighboring pixels are significantly reduced. Consequently, the image data contains a high amount of entropy, thwarting any entropy-based data compression algorithm. Secondly, the image spectrum flattens as the pixel data approaches white noise. Hence, there are no longer only a few "important" frequency components that could be selected for coding purposes without introducing disturbing artifacts into the reconstructed image.

In video data, time as a third dimension comes into play. Obviously, "natural" videos are characterized by a high degree of correlation between consecutive images. Conventionally, these temporal correlations are further exploited for video data compression by encoding only differences between consecutive images. In this context, motion compensated prediction is employed to encode a translation from one image to the next and to encode only the error of the predicted image.

However, this approach fails likewise with finely detailed images. Even if such an image exhibits only global motion, e.g. due to a camera pan, the prediction error depends critically on the precision of the employed motion estimation. Even worse, finely detailed images, for instance leaves moving in the wind, tend to exhibit irregular local motion. In this case, motion compensation fails completely.

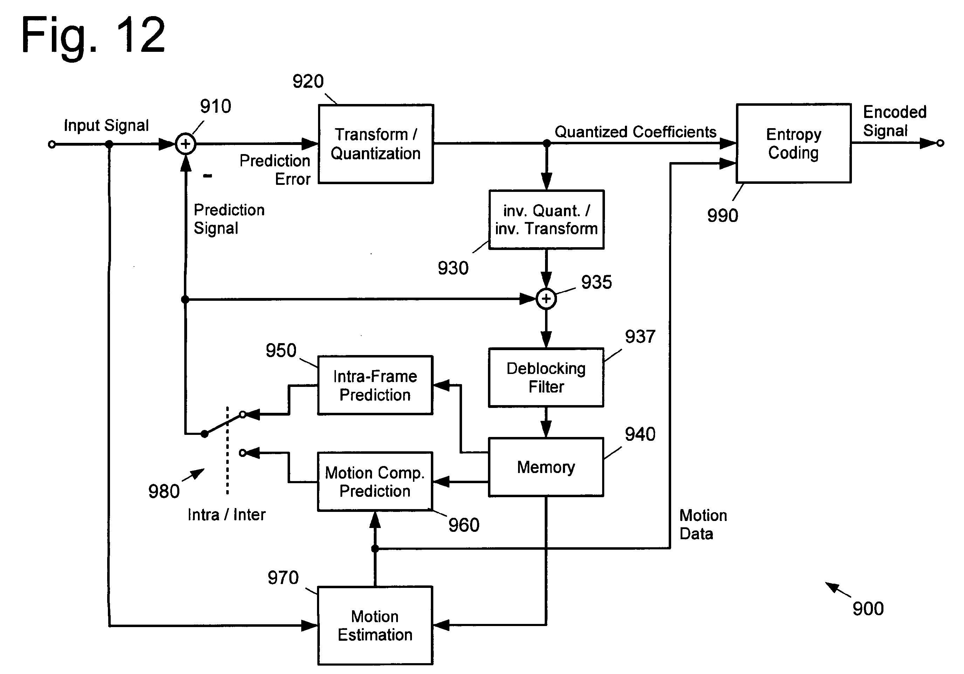

Referring to Fig. 12, an example of a conventional video encoder is illustrated. The video encoder, generally denoted by reference numeral 900, comprises a subtractor 910 for determining differences between a current block of a video image (input signal) and a prediction signal of the current block which is based on previously encoded blocks stored in memory 940. A transformation and quantization unit 920 transforms the resulting prediction error from the spatial domain to the frequency domain and quantizes the obtained transform coefficients. An entropy coding unit 990 entropy encodes the quantized transform coefficients.

In accordance with the H.264 / AVC standard, the input image is divided into macro blocks. The encoder 900 employs a Differential Pulse Code Modulation (DPCM) approach which only transmits differences between blocks of an input video sequence and their predictions based on previously encoded blocks ("the locally decoded image"). These differences are determined in subtractor 910, which receives the blocks to be encoded in order to subtract the prediction signal therefrom.

The locally decoded image is provided by a decoding unit incorporated into video encoder 900. The decoding unit performs the encoding steps in reverse manner. An inverse quantization and inverse transformation unit 930 dequantizes the quantized coefficients and applies an inverse transformation to the dequantized coefficients. In adder 935, the decoded differences are added to the prediction signal to form the locally decoded image. Further, a deblocking filter 937 reduces blocking artifacts in the decoded image.

The type of prediction that is employed by video encoder 900 depends on whether the macro blocks are encoded in "Intra" or "inter" mode. In "Intra" mode the video encoding standard H.264/AVC uses a prediction scheme based on already encoded macro blocks of the same image in order to predict subsequent macro blocks. In "Inter" mode, motion compensated prediction between corresponding blocks of several consecutive frames is employed.

Only Intra-encoded images (I-type images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 950, and Inter-mode, i.e. a processing by motion compensated prediction unit 960, is controlled by Intra/Inter switch 980.

In "Inter" mode, a macro block is predicted from corresponding blocks of previous frames by employing motion compensation. The estimation is accomplished by a motion estimator unit 970, receiving the current input signal and the locally decoded image. Motion estimation yields two-dimensional motion vectors, representing a pixel displacement between the current block and the corresponding block in previous frames. Based on the estimated motion, a motion compensated prediction unit 960 provides a prediction signal.

For both the "Intra" and the "inter" encoding mode, the differences between the current and the predicted signal are transformed into transform coefficients by transformation / quantization unit 920. Generally, an orthogonal transformation such as a two-dimensional Discrete Cosine transformation (DCT) or an integer version thereof is employed.

The transform coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than fine details so that more bits are spent for coding the low frequency components than for the higher ones.

After quantization, the two-dimensional array of transform coefficients has to be converted into a one-dimensional string to pass it to the entropy encoder. This conversion is done by scanning the array in a predetermined sequence. The thus obtained one-dimensional sequence of quantized transform coefficients is compressed to a series of number pairs called run levels. Finally, the run-level sequence is coded with binary code words of variable length (Variable Length Code, VLC). The code is optimized to assign shorter code words to most frequent run-level pairs occurring in typical video images. The resulting bitstream is multiplexed with the motion information and stored on a recording medium or transmitted to the decoder side.

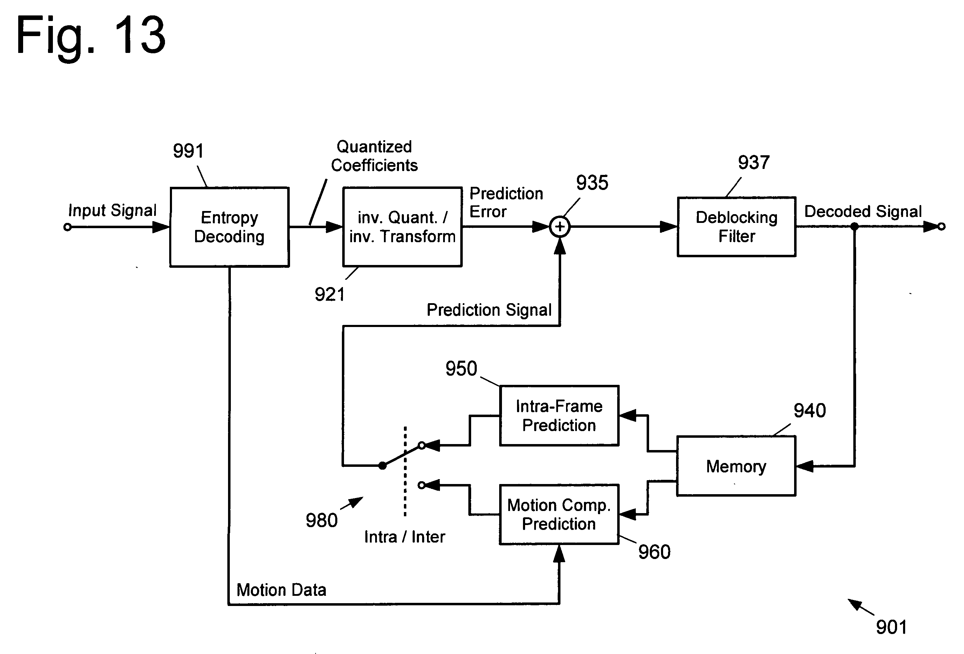

For reconstructing the encoded images at the decoder side, the encoding process is applied in reverse manner. A schematic block diagram, illustrating the configuration of the corresponding decoder, is shown in Fig. 13.

In decoder 901 of Fig. 13, first the entropy encoding of transform coefficients and motion data is reversed in an entropy decoding unit 991. This step also involves an inverse scanning in order to convert the sequence of decoded transform coefficients into a two-dimensional block of data as it is required for the inverse transformation. The decoded block of transform coefficients is then submitted to an inverse quantizer and inverse transformer 921 and the decoded motion data is sent to a motion compensated prediction unit 960. The result of the inverse transformation contains prediction differences and is added by adder 935 to the prediction signal stemming from the motion compensated prediction unit 960 in Inter-mode or stemming from an Intra-frame prediction unit 950 in Intra-mode. The reconstructed image may be passed through a deblocking filter 937 and the decoded signal is stored in memory 940 to be applied to prediction units 950, 960.

The present invention has been devised to overcome the above problems of image and video compression, in particular with respect to finely detailed images, and relates to an improved method and a corresponding apparatus for representing image and video data. It aims on improving subjective picture quality and can be combined with video coding schemes such as H. 264/AVC.

The inventive method is a combination of traditional image representation and subjective signal enhancement. To this end, an input signal is separated into two parts. In the coding process, one part is coded traditionally and the other part is represented by parameters. At the decoder side, the traditionally coded part is reconstructed and the other one is employed to enhance the signal by applying a texture synthesis algorithm.

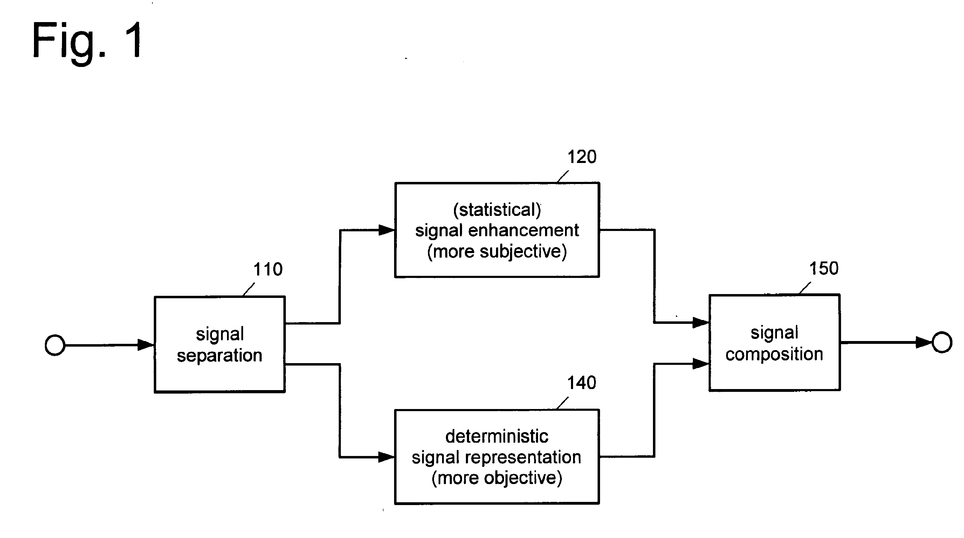

Figure 1 is a block diagram illustrating the basic idea of the present invention. The signal that is to be represented is fed to a signal separator 110, which is separating the input signal into two components. The first component is fed to a signal representation unit 140. The signal representation unit 140 is applying a deterministic signal representation method such as PCM (pulse code modulation), DPCM (differential pulse code modulation), and transform-based methods. Each of these representation methods aims at representing the signal so that an objective quality measure such as the MSE (means square error) of the represented signal relative to the original signal is optimized.

On the other hand, the second component is fed to a signal enhancement unit 120, wherein the signal is analyzed so as to compute texture parameters that represent a texture that is subjectively similar to a texture contained in the signal. Based on the computed texture parameters, the signal enhancement unit 120 synthesizes a texture and outputs a signal based on the synthesized texture. In general, the synthesized texture is not a faithful representation of the second component signal in terms of an objective quality measure such as MSE. Nevertheless, the synthesized texture may provide a subjectively satisfying replacement for the original signal content in the sense that it contains the relevant information about its texture, e.g., grass, gravel, etc., whereas irrelevant details such as form and position of individual blades of grass or pebble stones are neglected.

Both the texture signal and the representation of the first component signal is jointly fed to a signal composition unit 150, wherein an output signal is generated that contains the synthesized texture signal and the representation of the first component signal.

Preferably, the first component consists of the lower frequencies of the input signal, whereas the complementary second component contains the remaining higher frequencies. In this manner, those signal parts that are more important for the human visual system are faithfully represented in a traditional manner and signal parts, where the human visual system is less sensitive, i.e., the higher frequency components, are synthesized using texture synthesis. Thus, the advantages of both approaches can be combined and the subjective picture quality, especially the authenticity of textures, can be improved significantly.

In general, the signal separator 110 performs a sub-band decomposition of the input signal. Therefore, the signal separator 110 may comprise a plurality of filters, especially low-pass, band-pass, and high-pass filters, that separate the input signal into the lower and the higher frequency components. Specifically, the signal separator 110 may perform a wavelet transformation in order to separate the input signal into its sub-bands. Alternatively, a Fourier transformation, especially a discrete cosine transformation may be performed. However, other sub-band approaches are also possible, such as approaches based on steerable pyramids.

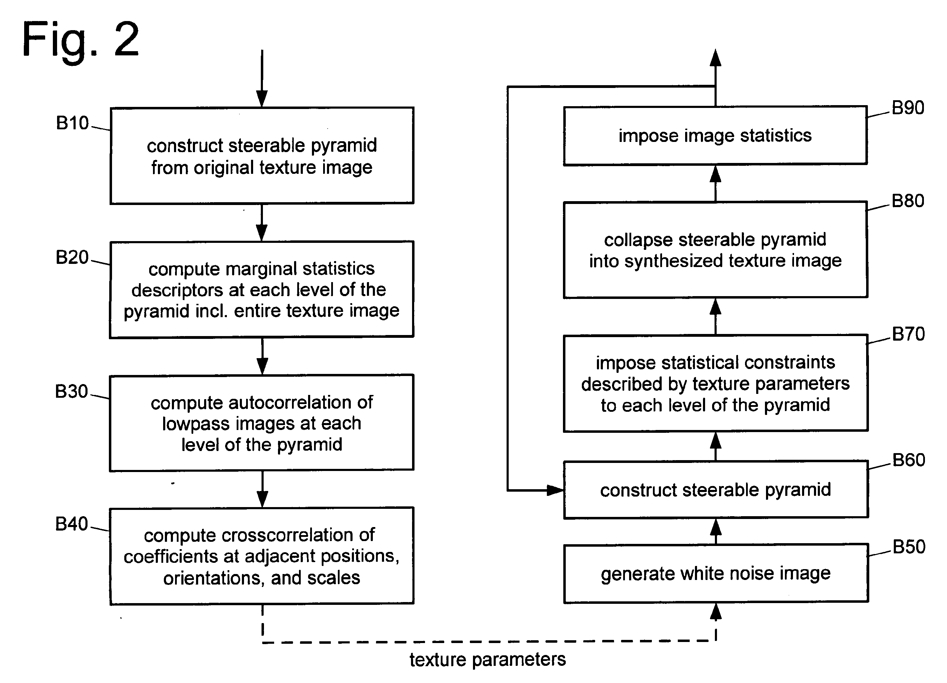

The signal enhancement unit 130 may apply any texture analysis and synthesis method known in the art. For instance, a parametric texture model based on joint statistics of complex wavelet transforms may be applied, as illustrated by the flowchart in Fig. 2.

According to this method, a steerable pyramid is constructed in step B10 by recursively decomposing the input signal to the signal enhancement unit 130 into a set of oriented sub-bands and a lowpass residual band. Statistical texture parameters are then computed in steps B20-B40 using this decomposition. In particular, marginal statistics descriptors such as variance, skewness and kurtosis as well as minimum and maximum values of the image pixels are computed at each level of the pyramid, including parameters that describe the marginal statistics of the entire image. Moreover, autocorrelations and various cross-correlations are computed at and inbetween the levels of the pyramid.

From the thus computed texture parameters arbitrary amounts of alike looking texture can be generated. Specifically, a white noise image is generated in step B50 and decomposed into oriented sub-bands by the steerable pyramid approach in step B60 in accordance with the decomposition performed in step B10. Each sub-band of the white noise image is further tweaked in step B70 so as to meet the statistical constraints described by the computed texture parameters. Finally, the pyramid is collapsed in step B80 and tweaked in step B90 so that the marginal statistics of its pixel data meets statistical parameters computed in step B20 for the entire image. Steps B60 - B90 may be iterated, i.e., the generated texture may be employed as a starting point for the decomposition and tweaking process instead of the white noise image, for a predetermined number of iterations or until the synthesized texture has become sufficiently stable.

Although the operation of the signal enhancement unit 120 has been exemplified by means of a particular parametric texture model, the present invention is not restricted in this respect. Instead, any parametric texture model or even non-parametric texture models, such as sampling-based models, may be employed.

Signal composition unit 150 is basically performing the inverse operation of the signal separator 110. Generally, the output signals of the signal enhancement unit 120 and the signal representation unit 140 may simply be added in order to generate the desired output signal. However, more complex operations, such as collapsing a steerable pyramid or an inverse wavelet-transformation, may be needed depending on the mechanism that has been employed for separating the input signal into two components.

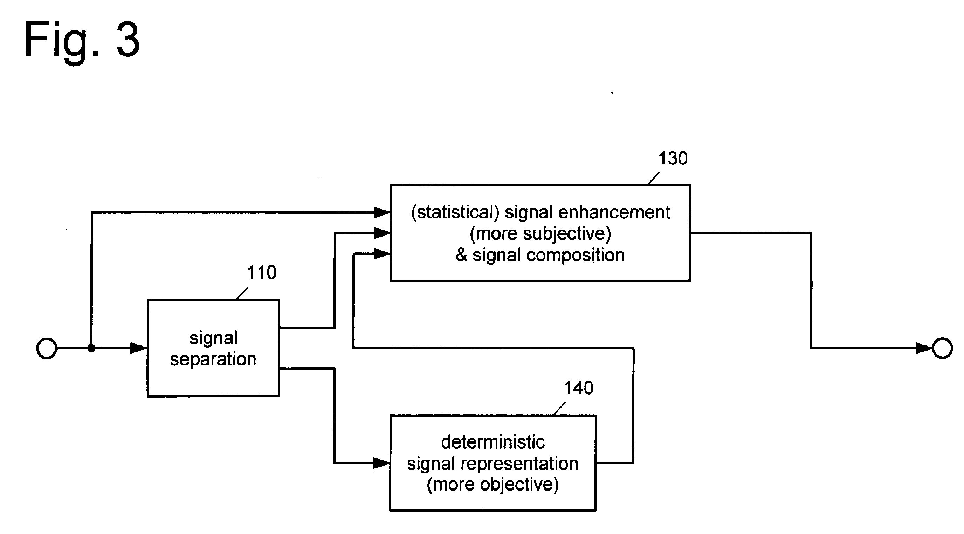

Figure 3 illustrates an alternative configuration of the block diagram of Fig. 1, wherein the signal enhancement unit 120 and the signal composition unit 150 are merged into a signal enhancement and composition unit 130, which also receives an additional copy of the original input signal. Alternatively, the signal enhancement and composition unit 130 may also receive a copy of the first component instead of the original input signal. As it will become apparent from the following description, the same advantages can be achieved in both cases.

Due to the additional feed of the input signal to the signal enhancement and composition unit 130, the texture parameters may also be computed by taking the original input signal into account. In this manner, the computed texture parameters may also comprise cross-correlations between the first and the second component, which would not be possible otherwise. These cross-correlations may describe the spatial information for the texture that is to be synthesized. In other words, for a quasi periodic texture such as a brick wall or a woven fabric, cross-correlations between the low-frequency and the high frequency component may contain the phase information needed for correctly merging the synthesized texture and the reconstructed low-frequency component.

On the other hand, the synthesis of the texture may also be based on the reconstructed first component signal so as to take the information contained in the low-pass component into account. In particular, the texture may be synthesized based on texture parameters that describe a statistical relation between the first and the second signal component, such as the cross-correlations mentioned above. This alternative configuration will become more important in connection with an application of the present invention to image and video encoders/decoders, which is described below.

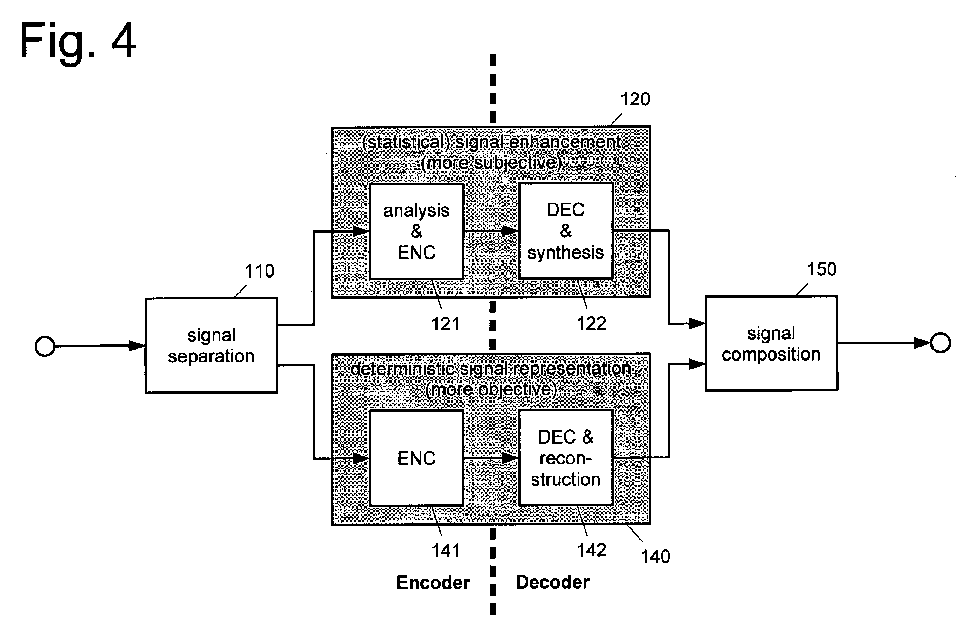

Figure 4 illustrates a particular application of the present invention to image and video coding. The image or video signal to be encoded is fed to the signal separator 110, where it is split into two separate sub-bands as described above. The two sub-band components are encoded independently of each other. The low-frequency component is fed to a conventional image or video encoder 141 and is encoded into a first bitstream. The high-frequency component, on the other hand, is fed to a texture analysis and encoding unit 121. The texture analysis and encoding unit 121 is computing representative texture parameters as describe in connection with Fig. 1. The thus computed texture parameters are then encoded into a second bitstream.

For encoding texture parameters a method similar to the encoding of transform coefficients, as described above in connection with Fig. 12, may be employed. In particular, texture parameters are converted into a one-dimensional data string and passed to an entropy coder in order to be encoded by a variable-length code, such as a Huffman code. Optionally, the texture parameters may also be quantized in analogy to the transform coefficients in order to reduce the amount of data to be encoded.

The first and the second bitstream may be multiplexed into a single bitstream which is then output by the encoder constituted by the signal separator 110, the encoder 141, and the texture analysis and encoding unit 121.

The bitstream(s) output by the encoder may be stored to a recording medium or transmitted over a transmission channel.

At the decoder side, the received bitstream may be de-multiplexed into the first bitstream representing the low-frequency component and the second bitstream containing the texture parameters. The first and the second bitstream are then received by a decoder and reconstruction unit 142 and a decoder and synthesizer unit 122, respectively. The decoder and reconstruction unit 142 is decoding the first bitstream and reconstructing the low-frequency component of the original input signal. The decoder and synthesizer unit 122, on the other hand, is decoding the texture parameters contained in the second bitstream and is synthesizing, based on the decoded texture parameters, a texture signal that mimics the high-frequency component of the original input signal. The reconstructed low-frequency component and the synthesized texture signal are fed to a signal composition unit 150 in order to be merged into the decoder's output signal.

According to the present invention, input image/video data can be compressed in a highly efficient manner since subjectively irrelevant details contained in the irregular pattern of the high-frequency component are replaced by a synthesized texture, which is fully determined by a few texture parameters only. Hence, in contrast to conventional image/video data compression, less bandwidth and storage capacity is required for transmitting and storing the image/video data without compromising image quality.

Moreover, the present invention can achieve a superior subjective image quality, because the synthesized texture is sharper and more detail rich than what can be achieved by conventional video compression methods at comparable compression rates. Most importantly, the synthesized texture is free of any disturbing compression artifacts.

Finally, the present invention can represent texture in a more natural and authentic manner than conventional video compression techniques based on texture synthesis, because the low-frequency component is faithfully represented rather than synthesized.

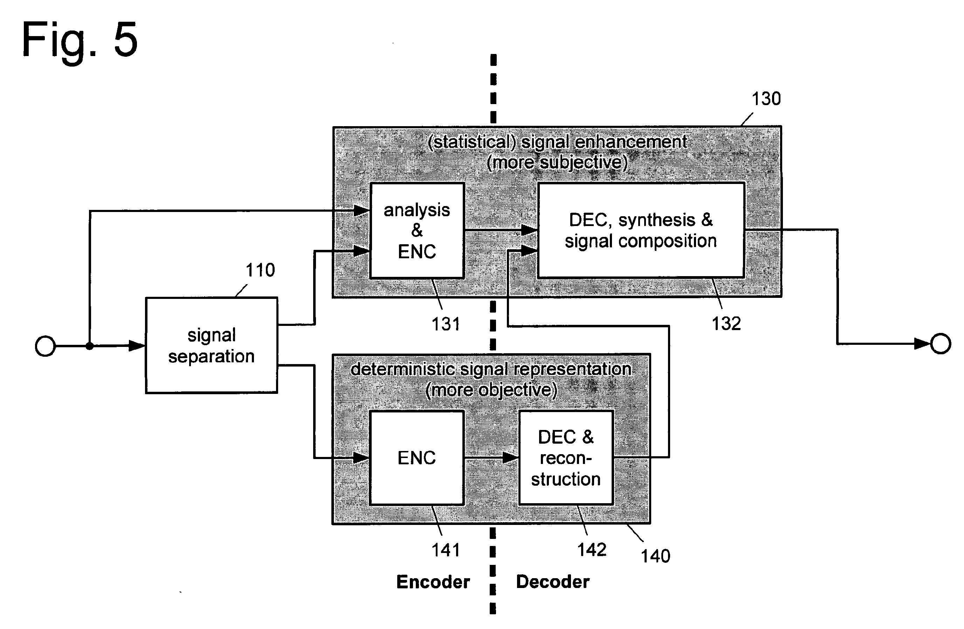

Figure 5 illustrates an alternative configuration of the image/video coder shown in Fig. 4. In analogy to Fig. 3, the decoder and synthesizer unit 122 and the signal composition unit 150 are merged into a single decoder, synthesizer, and signal composition unit 132. Moreover, the texture analysis and encoding unit 131 receives an additional copy of the original input signal. In this configuration, the texture parameters may also be computed by taking the original input signal into account and the synthesis of the texture on the decoder side may in addition be based on the reconstructed first component signal so as to also take information contained in the low-pass component into account. In particular, the reconstructed first component signal output by the reconstruction unit 142 may be used in the texture synthesis algorithm in order to get an output image that is visually similar to the original one.

In this manner, the encoder may compute texture parameters that comprise cross-correlations between the first and the second component, which may then be used by the decoder to get the spatial information, i.e. the phase, of a texture right. This may be particularly important in case of images that are further divided in the spatial domain into separately represented regions. Disturbing artifacts like visible seams at the regions' borders can only be prevented if the textures for each region are synthesized with the correct phase relative to each other. According to the present invention, this is achieved by fixing the phase of the synthesized texture to features of the low-frequency component, for instance by employing the above mentioned cross-correlations between the high and the low-frequency component.

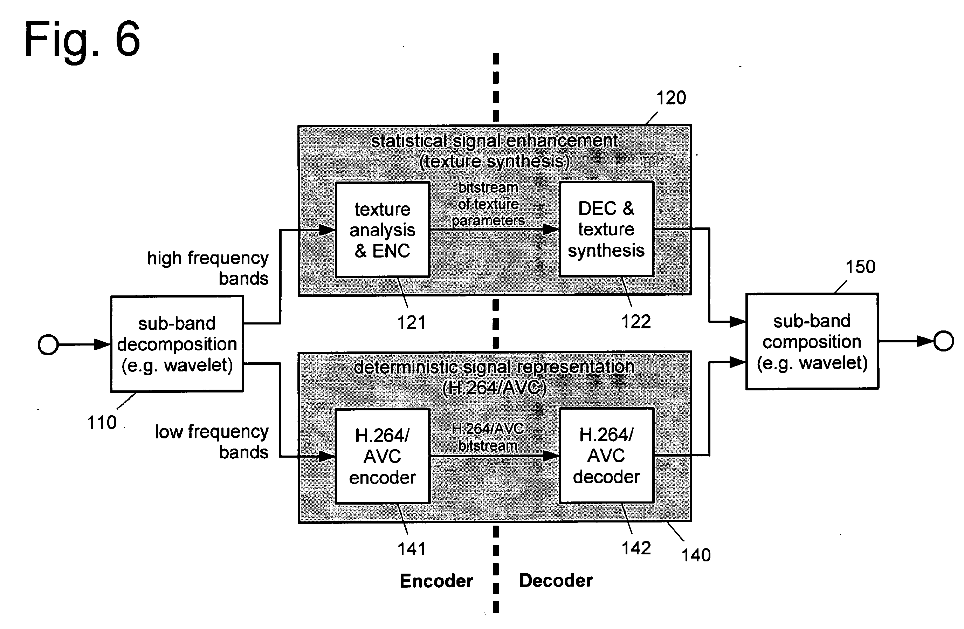

Figure 6 illustrates a specific example of applying the present invention to video coding. The configuration shown in Fig. 6 is similar to that of Fig. 4, wherein like parts are denoted by like reference numerals, a detailed explanation of which will be omitted.

The signal separator 110 splits the input video signal into a low-frequency and a high-frequency component by means of, for instance, a wavelet-based sub-band decomposition. The low-frequency component, which is particularly important for the human visual system, is encoded into the first bitstream by a conventional video encoding method such as H.264/AVC. The high-frequency component, which is less important for the human visual system, is analyzed and the resulting texture parameters are encoded as described above in connection with Fig. 4.

At the decoder side, the first bitstream is decoded in accordance with the corresponding conventional H.264/AVC decoder. The second bitstream is decoded as described above in connection with Fig. 4. The sub-band composition unit receives both the reconstructed low-frequency component and the synthesized high-frequency component so as to compose the final output signal, e.g., by means of a wavelet-based sub-band composition method.

Specifically, a new set of texture parameters may be computed and encoded for each frame of the input video signal. Alternatively, some or all of the texture parameters may be transmitted to the decoder only once for several frames, so that the texture is synthesized based on at least partially identical sets of texture parameters for a plurality of frames. This is particularly useful to further reduce the amount of data that has to be transmitted or recorded in cases where intrinsic texture properties do not change from frame to frame. It is to be noted that texture movement can still be represented if cross-correlations with the low-frequency component are employed.

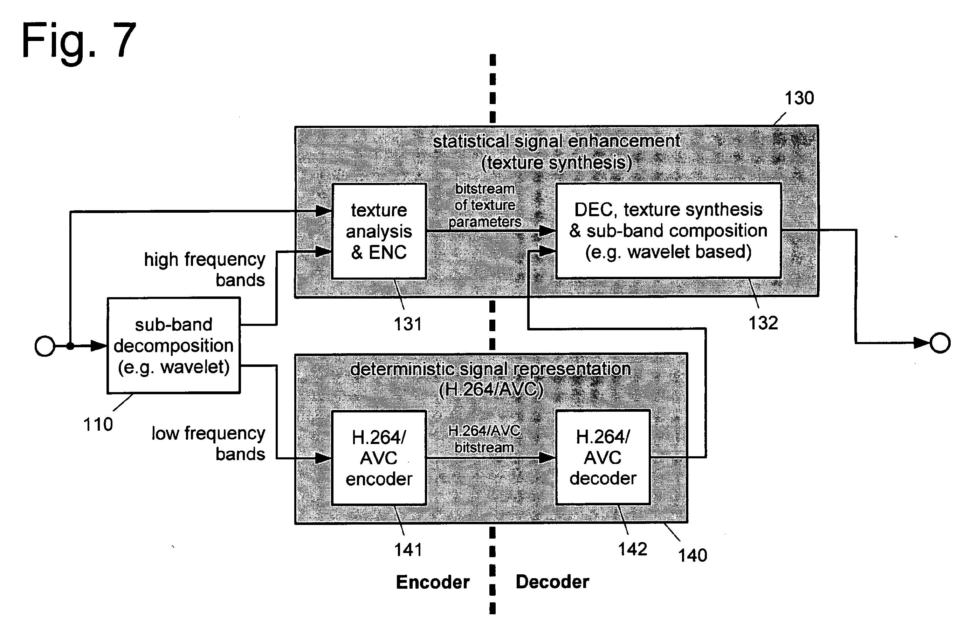

Figure 7 illustrates an alternative configuration of the video coder shown in Fig. 6. In analogy to Fig. 5, the sub-band composition unit 150 and the decoder and synthesizer unit 122 are merged into a single decoder, synthesizer, and sub-band composition unit 132. Moreover, the texture analysis and encoding unit 131 receives an additional copy of the original input signal. In this configuration, the same advantages can be achieved as described in connection with Fig. 5.

In this configuration, the set of texture parameters may also comprise cross-correlations between the high and the low-frequency component. These cross-correlations can then be employed at the decoder side to fix the spatial information ("phase") of the synthesized texture. Due to fixing the "phase" of the synthesized texture to features of the low-frequency component by means of cross-correlation, even time-varying textures can be represented. Moving objects, for instance, will carry their texture along themselves as the texture is fixed to the object's features represented in the low-frequency component.

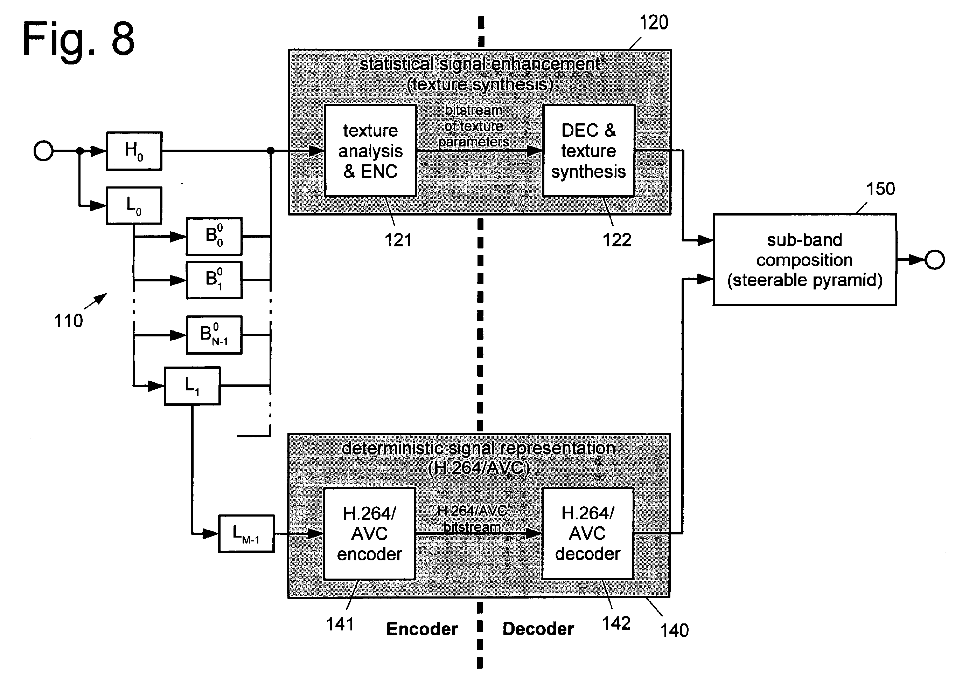

Figure 8 illustrates another specific example of applying the present invention to video coding. The configuration shown in Fig. 8 is similar to that of Fig. 6, wherein like parts are denoted by like reference numerals, a detailed explanation of which will be omitted.

The configuration shown in Fig. 8 differs from the configuration of Fig. 6 in that the signal separator 110 is based on steerable pyramids, i.e., a recursive multiscale sub-band decomposition scheme. At the finest scale the input signal is separated into a low-pass image $L_0$ and a high-pass residual image $H_0$. The low-pass image is further decomposed into N oriented band-pass images $\left( B_0^0, \ldots, B_{N-1}^0 \right)$ and another low-pass image $L_1$, which is downsampled by a factor of 2. This step may be repeated recursively.

On the encoder side, all sub-bands at the finer scales are fed to the texture analysis and encoder unit 121 in order to be represented by texture parameters only. The low-pass residual image at the coarsest scale $L_{M-1}$, on the other hand, is coded by a conventional H264/AVC encoder 141. Both the H264/AVC bitstream and the bitstream of texture parameters is transmitted to the decoder.

On the decoder side, the texture parameters are decoded and the sub-bands at the finer scales are substituted by a texture synthesis algorithm. The H264/AVC bitstream is decoded by a H264/AVC decoder in order to obtain the low-pass residual image. The entire pyramid is collapsed in the sub-band composition unit 150 in order to generate the decoded output signal.

This approach has the particular advantage, that the entire information of the low-frequency component is contained in a video signal with only a fraction of the original resolution. Therefore, both the conventional video encoder 141 and the decoder 142 have to handle only a fraction of the original amount of data, which translates directly into improved performance and reduced costs.

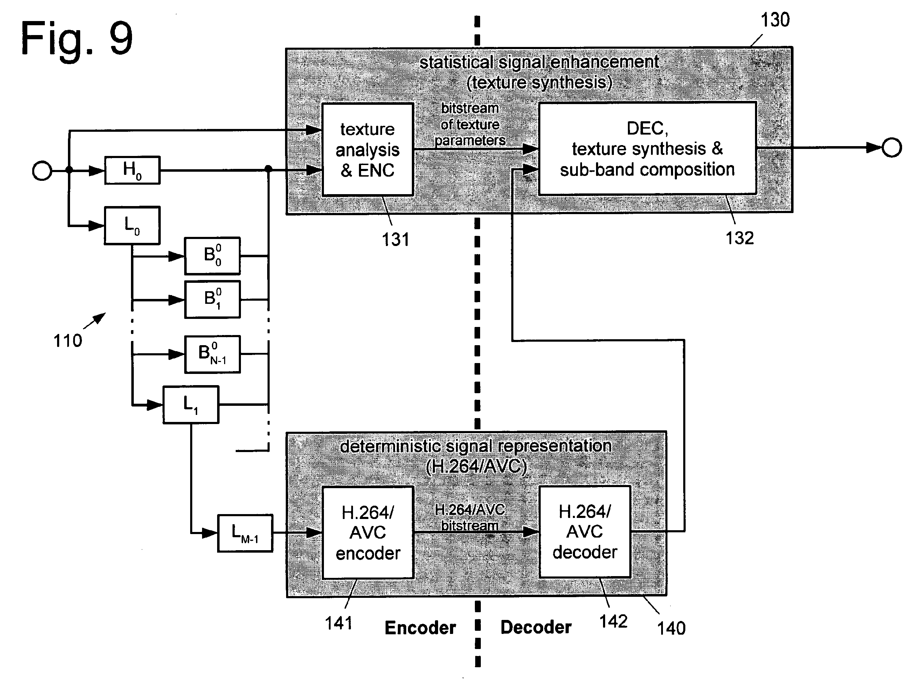

Figure 9 illustrates an alternative configuration of the video coder shown in Fig. 8. In analogy to Fig. 5, the sub-band composition unit 150 and the decoder and synthesizer unit 122 are merged into a single decoder, synthesizer, and sub-band composition unit 132. Moreover, the texture analysis and encoding unit 131 receives an additional copy of the original input signal. In this configuration, the same advantages can be achieved as described in connection with Figs. 5 and 7.

Preferably, a decomposition based on one scale and four oriented band-pass filters is employed. The low-pass residual image is handled by the conventional encoder, whereas the complementary image component is represented by texture synthesis. Hence, signal separation can be seen as a classical frequency band separation in connection with an anti-aliasing filter.

The steerable pyramid decomposition, however, will only become relevant for texture synthesis in accordance with the method describe above in connection with Fig. 2. To that end, the original input image will be further decomposed at an additional scale. This leads to a decomposition into four oriented band-pass components on a first scale, four oriented band-pass components on a second scale, one high-pass residual component, and one low-pass residual component. The band-pass components on the first scale and the high-pass residual correspond to the statistical signal component. The band-pass components on the second scale and the low-pass residual correspond to the deterministic signal component.

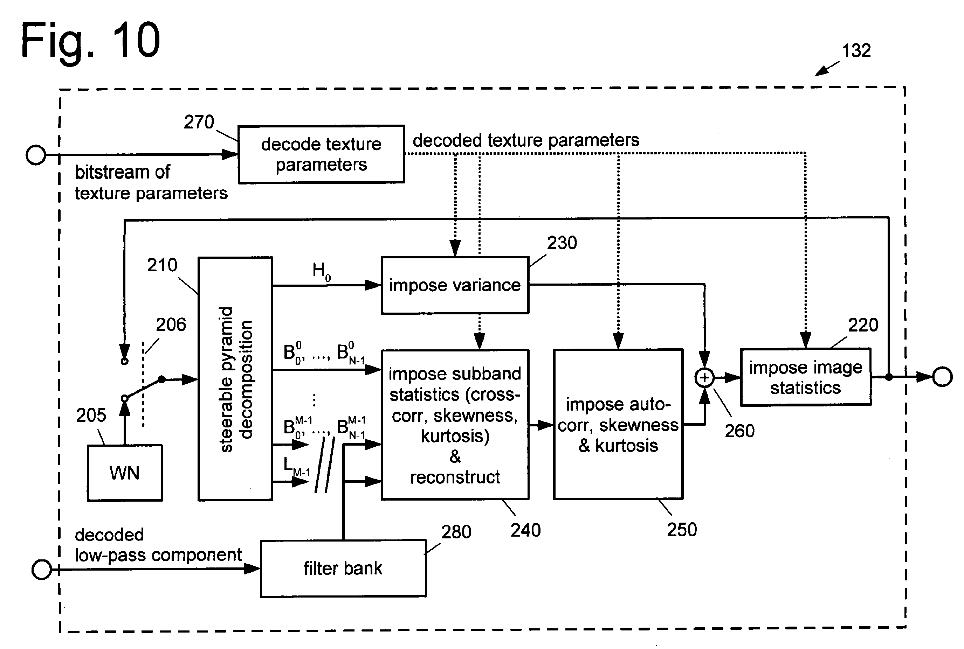

Figure 10 is a block diagram of the decoder, synthesizer, and sub-band composition unit 132 in accordance with an embodiment of the present invention. The bitstream of encoded texture parameters is fed to a decoder 270, which outputs the decoded texture parameters required for texture synthesis. In accordance with the method described in connection with Fig. 2, texture synthesis starts from a white noise image generated by white noise generator 205. The white noise image is decomposed into a steerable pyramid by decomposition unit 210. The low-frequency sub-bands

$$B_0^{M-1}, \ldots, B_{N-1}^{M-1}$$ and the low-pass residual image

$L_{M-1}$ output by decomposition unit 210, however, are replaced by the corresponding components of the decoded low-pass component. The replacement components are generated by filter bank 280 from the output of decoder 142. It is to be noted that this replacement actually corresponds to the sub-band composition performed by sub-band composition unit 150 in the first configuration of the present invention.

The pixel data distribution of the high-frequency sub-bands is then tweaked so as to meet the statistical constraints described by the texture parameters. In particular, the high frequency residual $H_0$ is transformed so as to meet a variance constraint by unit 230, whereas sub-band statistics including cross-correlations, skewness, and kurtosis are imposed on the intermediate frequency sub-bands $B_0^0, \ldots, B_{N-1}^0$ from decomposition unit 210. The decoded low frequency components

$$B_0^{M-1}, \ldots, B_{N-1}^{M-1}, \ L_{M-1}$$ from decoder 142, however, are not altered by sub-band statistics unit 240. This unit further collapses the intermediate and the low frequency sub-bands of the steerable pyramid and feeds the thus reconstructed signal to unit 250 in order to impose constraints regarding the autocorrelation, skewness, and kurtosis. Adder 260 is performing the last step of collapsing the steerable pyramid by adding the outputs of units 230 and 250. Statistics unit 220 imposes statistical constraints regarding the entire image so as to provide finally the decoder's output signal. The entire synthesis process may be iterated via switch 206.

The present invention has been exemplified in terms of block diagrams and encoder/decoder apparatuses. However, this invention may also be implemented as a method for encoding and decoding image/video data or as a computer program product with program code stored on a computer readable medium.

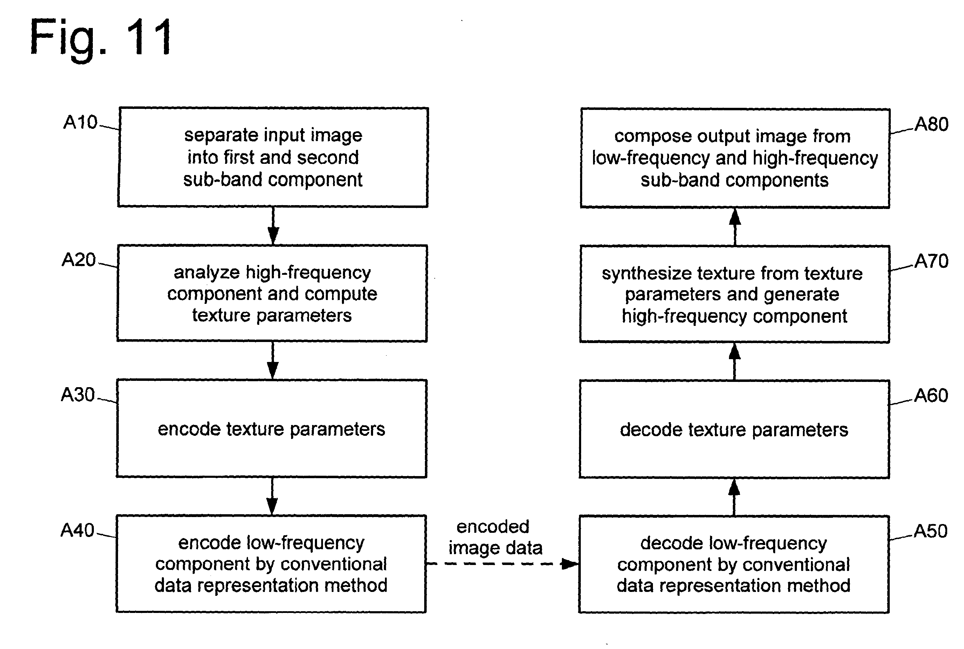

Figure 11 is a flow chart illustrating a method for image and video coding in accordance with an embodiment of the present invention. In step A10 an input image is separated into a first and a second sub-band component. The high-frequency component is analyzed in step A20 so as to compute representative texture parameters, which are then encoded in step A30. In analogy to the alternative configuration shown in Figs. 5, 7, and 9, the representative texture parameters may also be computed by taking the original input signal into account so as to compute texture parameters that describe a relation between the first and the second sub-band component, such as cross-correlations. The low-frequency component, on the other hand, is encoded by a conventional data representation method in step A40. At this point the entire input image is encoded and the encoded image data may be stored to a recording medium or transmitted via a communications channel.

Upon decoding the encoded image data, the low-frequency component is decoded by the conventional data representation method in step A50. The texture parameters, on the other hand, are decoded in step A60 and texture is synthesized from the decoded texture parameters so as to generate a high-frequency sub-band component in step A70. In analogy to the alternative configuration shown in Figs. 5, 7, and 9, the texture may also be synthesized by taking the decoded low-frequency sub-band component into account so as to fix the spatial information of the synthesized texture. Finally in step A80, the output image is composed from the low-frequency and the high-frequency sub-band components.

Summarizing, the present invention relates to a hybrid method for texture representation and, in particular, to image and video data compression based on this method and corresponding encoder and decoder apparatuses. An input signal is separated in the frequency domain into two sub-band components. The low-frequency component is encoded faithfully by means of a conventional image/video encoder. The high-frequency component, on the other hand, is analyzed so as to compute representative texture parameters. Instead of faithfully encoding the high-frequency component, only the computed texture parameters are stored or transmitted. Upon decoding, the low-frequency component is reconstructed, whereas the high-frequency component is replaced by a similar-looking texture that has been synthesized in accordance with the texture parameters. Both the reconstructed low-frequency component and the synthesized high-frequency component are then merged in order to generate the output signal.

## Claims

1. An image encoder, comprising
   a signal separator (110) adapted for separating an input image signal into a first image signal and a second image signal;
   a first encoder (141) adapted for encoding the first image signal into a first bitstream;
   a texture analyzer (121) adapted for analyzing the second image signal and computing texture parameters representing a texture of the second image signal; and
   a second encoder (121) adapted for encoding the texture parameters into a second bitstream,
   **characterized in that**
   said first and second image signal represent two different sub-bands of the input image signal.

2. An image encoder according to claim 1, further comprising
   a multiplexer adapted for multiplexing the first and the second bitstream into an output bitstream.

3. An image encoder according to claim 1 or 2, further comprising
   a block partitioning means adapted for partitioning the input image into a plurality of blocks, each block consisting of a plurality of pixels, wherein each block is separately analyzed and encoded.

4. An image encoder according to any of claims 1 to 3, wherein the signal separator (110) further comprises a first and a second filtering means that receive the input image signal as an input and output the first and the second image signal, respectively.

5. An image encoder according to claim 4, wherein the first filter is a low-pass filter and the second filtering means is a high-pass filter.

6. An image encoder according to any of claims 1 to 3, wherein the signal separator (110) generates the first and the second image signal in accordance with the result of a sub-band decomposition of the input image signal.

7. An image encoder according to claim 6, wherein the sub-band decomposition is based on one of wavelet transformation, discrete Fourier transformation, and steerable pyramids.

8. An image encoder according to any of claims 1 to 7, wherein the first and the second image signal represent a low-frequency and a high-frequency component of the input image signal, respectively.

9. An image encoder according to any of claims 1 to 8, wherein the first encoder (141) is employing a transform-based image compression method.

10. An image encoder according to any of claims 1 to 9, wherein the texture analyzer (121) is computing, as the texture parameters, statistical properties of the second image signal.

11. An image encoder according to any of claims 1 to 9, wherein the texture analyzer (121) is computing, as the texture parameters, a representative sample of the second image signal.

12. An image encoder according to claim 10 or 11, wherein the texture analyzer (121) is adapted for analyzing the second image signal and either one of the first image signal and the input image signal, and is further computing, as the texture parameters, statistical properties of a relation of the second image signal and the first image signal.

13. A video encoder that is employing an image encoder according to any of claims 1 to 11 for encoding frames of an input video signal.

14. A video encoder that is employing an image encoder according to any of claims 1 to 11 for encoding at least one block of at least one I-frame of an input video signal.

15. A video encoder according to claim 13 or 14, wherein the first encoder (141) is employing a transform-based video compression method.

16. A video encoder according to claim 15, wherein the first encoder (141) is employing a video compression method according to one of the MPEG coding standards.

17. An image decoder, comprising
a first decoder (142) adapted for decoding a first bitstream into a first image signal;
a second decoder (122) adapted for decoding a second bitstream into texture parameters representing a texture;
a texture synthesizer (122) adapted for synthesizing texture determined by the texture parameters and generating a second image signal from the synthesized texture; and
a signal composer (150) adapted for composing an output image signal from the first image signal and the second image signal,
**characterized in that**
said first and second image signal represent two different sub-bands of the output image signal.

18. An image decoder according to claim 17 further comprising
a de-multiplexer adapted for de-multiplexing an input bitstream into the first and the second bitstream.

19. An image decoder according to claim 17 or 18, further comprising
a block assembling means adapted for assembling the output image from a plurality of blocks, each block consisting of a plurality of pixels, wherein each block has been separately decoded and synthesized.

20. An image decoder according to any of claims 17 to 19, wherein the first and the second image signal represent a low-frequency and a high-frequency component of the output image signal, respectively.

21. An image decoder according to any of claims 17 to 20, wherein the first decoder (142) is employing a transform-based image de-compression method.

22. An image decoder according to any of claims 17 to 21, wherein the texture synthesizer (122) is synthesizing the texture in accordance with statistical properties of the texture, said statistical properties being identified by the texture parameters.

23. An image decoder according to any of claims 17 to 21, wherein the texture synthesizer (122) is synthesizing the texture in accordance with a representative texture sample identified by the texture parameters.

24. An image decoder according to claim 22 or 23, wherein the texture synthesizer (122) is synthesizing the texture in further accordance with the decoded first image signal and statistical properties of a relation of the texture and the first image signal, said statistical properties being identified by the texture parameters.

25. A video decoder that is employing an image decoder according to any of claims 17 to 23 for decoding frames of an input video signal.

26. A video decoder that is employing an image decoder according to any of claims 17 to 23 for decoding at least one block of at least one I-frame of an encoded input video signal.

27. A video decoder according to claim 25 or 26, wherein the first decoder (142) is employing a transform-based video de-compression method.

28. A video decoder according to claim 27, wherein the first decoder (142) is employing a video de-compression method according to one of the MPEG coding standards.

29. An image encoding method, comprising the steps of
separating an input image signal into a first image signal and a second image signal;
encoding the first image signal into a first bitstream;
analyzing the second image signal and computing texture parameters representing a texture of the second image signal; and
encoding the texture parameters into a second bitstream,
**characterized in that**
said first and second image signal represent two different sub-bands of the input image signal.

30. An image encoding method according to claim 29, further comprising the step of
multiplexing the first and the second bitstream into an output bitstream.

31. An image encoding method according to claim 29 or 30, further comprising the step of

partitioning the input image into a plurality of blocks, each block consisting of a plurality of pixels, wherein each block is separately analyzed and encoded.

32. An image encoding method according to any of claims 29 to 31, wherein the separating step further comprises a first and a second filtering step that receive the input image signal as an input and output the first and the second image signal, respectively.

33. An image encoding method according to claim 32, wherein the first filtering step is a low-pass filtering step and the second filtering step is a high-pass filtering step.

34. An image encoding method according to any of claims 29 to 31, wherein the separating step performs a sub-band decomposition of the input image signal in order to generate the first and the second image signal.

35. An image encoding method according to claim 34, wherein the sub-band decomposition is based on one of wavelet transformation, discrete Fourier transformation, and steerable pyramids.

36. An image encoding method according to any of claims 29 to 35, wherein the first and the second image signal represent a low-frequency and a high-frequency component of the input image signal, respectively.

37. An image encoding method according to any of claims 29 to 36, wherein the step of encoding the first image signal is employing a transform-based image compression method.

38. An image encoding method according to any of claims 29 to 37, wherein the analyzing and computing step is computing, as the texture parameters, statistical properties of the second image signal.

39. An image encoding method according to any of claims 29 to 37, wherein the analyzing and computing step is computing, as the texture parameters, a representative sample of the second image signal.

40. An image encoding method according to 38 or 39, wherein the analyzing and computing step is analyzing the second image signal and either one of the first image signal and the input image signal, and is further computing, as the texture parameters, statistical properties of a relation of the second image signal and the first image signal.

41. A video encoding method that is employing an image encoding method according to any of claims 29 to 39 for encoding frames of an input video signal.

42. A video encoding method that is employing an image encoding method according to any of claims 29 to 39 for encoding at least one block of at least one I-frame of an input video signal.

43. A video encoding method according to claim 41 or 42, wherein the step of encoding the first image signal is employing a transform-based video compression method.

44. A video encoding method according to claim 43, wherein the step of encoding the first image signal is employing a video compression method according to one of the MPEG coding standards.

45. A computer program product comprising a computer readable medium having computer readable program code embodied thereon, the program code being adapted to carry out all steps of any of claims 29 to 44.

46. An image decoding method, comprising the steps of decoding a first bitstream into a first image signal; decoding a second bitstream into texture parameters representing a texture; synthesizing texture determined by the texture parameters and generating a second image signal from the synthesized texture; and composing an output image signal from the first image signal and the second image signal, **characterized in that** said first and second image signal represent two different sub-bands of the output image signal.

47. An image decoding method according to claim 46 further comprising the step of de-multiplexing an input bitstream into the first and the second bitstream.

48. An image decoding method according to claim 46 or 47, further comprising the step of assembling the output image from a plurality of blocks, each block consisting of a plurality of pixels, wherein each block has been separately decoded and synthesized.

49. An image decoding method according to any of claims 46 to 48, wherein the first and the second image signal represent a low-frequency and a high-frequency component of the output image signal, respectively.

50. An image decoding method according to any of claims 46 to 49 wherein the step of decoding the first bitstream is employing a transform-based image decompression method.

51. An image decoding method according to any of claims 46 to 50, wherein the synthesizing step is synthesizing the texture in accordance with statistical properties of the texture, said statistical properties being identified by the texture parameters.

**52.** An image decoding method according to any of claims 46 to 50, wherein the synthesizing step is synthesizing the texture in accordance with a representative texture sample identified by the texture parameters.

**53.** An image decoding method to claim 51 or 52, wherein the synthesizing step is synthesizing the texture in further accordance with the decoded first image signal and statistical properties of a relation of the texture and the first image signal, said statistical properties being identified by the texture parameters.

**54.** A video decoding method that is employing an image decoding method according to any of claims 46 to 52 for decoding frames of an encoded input video signal.

**55.** A video decoding method that is employing an image decoding method according to any of claims 46 to 52 for decoding at least one block of at least one I-frame of an encoded input video signal.

**56.** A video decoding method according to claim 54 or 55, wherein the step of decoding the first bitstream is employing a transform-based video de-compression method.

**57.** A video decoding method according to claim 56, wherein the step of decoding the first bitstream is employing a video de-compression method according to one of the MPEG coding standards.

**58.** A computer program product comprising a computer readable medium having computer readable program code embodied thereon, the program code being adapted to carry out all steps of any of claims 46 to 57.

# Fig. 1

EP 1 926 321 A1

signal separation — 110

(statistical) signal enhancement (more subjective) — 120

deterministic signal representation (more objective) — 140

signal composition — 150

# Fig. 2

B10 — construct steerable pyramid
from original texture image

B20 — compute marginal statistics
descriptors at each level of the
pyramid incl. entire texture image

B30 — compute autocorrelation of
lowpass images at each
level of the pyramid

B40 — compute crosscorrelation of
coefficients at adjacent positions,
orientations, and scales

B90 — impose image statistics

B80 — collapse steerable pyramid
into synthesized texture image

B70 — impose statistical constraints
described by texture parameters
to each level of the pyramid

B60 — construct steerable pyramid

B50 — generate white noise image

texture parameters

EP 1 926 321 A1

# Fig. 3

EP 1 926 321 A1

# Fig. 4

EP 1 926 321 A1

# Fig. 5

# Fig. 6

EP 1 926 321 A1

# Fig. 7

# Fig. 8

statistical signal enhancement (texture synthesis) 120

texture analysis & ENC 121

bitstream of texture parameters

DEC & texture synthesis 122

sub-band composition (steerable pyramid) 150

$H_0$

$L_0$

$B_0^0$

$B_1^0$

$B_{N-1}^0$

$L_1$

110

$L_{M-1}$

deterministic signal representation (H.264/AVC)

H.264/ AVC encoder 141

H.264/AVC bitstream

H.264/ AVC decoder 142

140

**Encoder** | **Decoder**

EP 1 926 321 A1

# Fig. 9

statistical signal enhancement
(texture synthesis)   130

texture
analysis
& ENC

bitstream
of texture
parameters

DEC,
texture synthesis &
sub-band composition

131

132

$H_0$

$L_0$

$B_0^0$

$B_1^0$

$B_{N-1}^0$

$L_1$

110

$L_{M-1}$

deterministic signal representation
(H.264/AVC)

H.264/
AVC
encoder

H.264/AVC
bitstream

H.264/
AVC
decoder

141   **Encoder ▮ Decoder**   142   140

EP 1 926 321 A1

# Fig. 10

EP 1 926 321 A1

132

**270** decode texture parameters

bitstream of texture parameters

decoded texture parameters

**210** steerable pyramid decomposition

**206**

**205** WN

decoded low-pass component

**280** filter bank

$H_0$

$B_0^0, ..., B_{N-1}^0$

$B_0^{M-1}, ..., B_{N-1}^{M-1}$

$L_{M-1}$

**230** impose variance

**240** impose subband statistics (cross-corr, skewness, kurtosis) & reconstruct

**250** impose auto-corr, skewness & kurtosis

**260** +

**220** impose image statistics

# Fig. 11

```
A10 ┌─────────────────────┐        ┌─────────────────────┐ A80
    │  separate input image│        │compose output image from│
    │  into first and second│        │low-frequency and high-frequency│
    │  sub-band component  │        │  sub-band components │
    └─────────────────────┘        └─────────────────────┘
             │                                 ▲
             ▼                                 │
A20 ┌─────────────────────┐        ┌─────────────────────┐ A70
    │ analyze high-frequency│        │synthesize texture from texture│
    │ component and compute │        │  parameters and generate│
    │  texture parameters  │        │ high-frequency component│
    └─────────────────────┘        └─────────────────────┘
             │                                 ▲
             ▼                                 │
A30 ┌─────────────────────┐        ┌─────────────────────┐ A60
    │                      │        │                      │
    │ encode texture parameters│    │ decode texture parameters│
    │                      │        │                      │
    └─────────────────────┘        └─────────────────────┘
             │                                 ▲
             ▼          encoded                │
A40 ┌─────────────────────┐ image data ┌─────────────────────┐ A50
    │  encode low-frequency│ - - - - ▶ │  decode low-frequency│
    │ component by conventional│       │ component by conventional│
    │ data representation method│       │ data representation method│
    └─────────────────────┘        └─────────────────────┘
```

EP 1 926 321 A1

# Fig. 12

EP 1 926 321 A1

# Fig. 13

EP 1 926 321 A1

**European Patent Office**

**EUROPEAN SEARCH REPORT**

Application Number

EP 06 02 4537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARCUS J NADENAU ET AL: "Visually Improved Image Compression by Combining a Conventional Wavelet-Codec With Texture Modeling" IEEE TRANSACTIONS ON IMAGE PROCESSING, IEEE SERVICE CENTER, PISCATAWAY, NJ, US, vol. 11, no. 11, November 2002 (2002-11), XP011074325 ISSN: 1057-7149 * the whole document * | 1-58 | INV. H04N7/26 |
| A | WO 97/16027 A (LINE IMAGING SYSTEMS L L C [US]) 1 May 1997 (1997-05-01) * page 4, line 22 - page 5, line 31 * * figure 1 * | 1-58 | |
| D,A | NDJIKI-NYA P ET AL: "Improved H.264/AVC coding using texture analysis and synthesis" PROCEEDINGS 2003 INTERNATIONAL CONFERENCE ON IMAGE PROCESSING. ICIP-2003. BARCELONA, SPAIN, SEPT. 14 - 17, 2003, INTERNATIONAL CONFERENCE ON IMAGE PROCESSING, NEW YORK, NY : IEEE, US, vol. VOL. 2 OF 3, 14 September 2003 (2003-09-14), pages 849-852, XP010669967 ISBN: 0-7803-7750-8 * the whole document * | 1-58 | TECHNICAL FIELDS SEARCHED (IPC) H04N |

The present search report has been drawn up for all claims

| Place of search | Date of completion of the search | Examiner |
|---|---|---|
| The Hague | 12 April 2007 | Wahrenberg, Annika |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 06 02 4537

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2007

| Patent document cited in search report | | Publication date | Patent family member(s) | | Publication date |
|---|---|---|---|---|---|
| WO 9716027 | A | 01-05-1997 | AU | 7598296 A | 15-05-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. DUMITRAS ; B. G. HASKELL.** An encoderdecoder texture replacement method with application to content-based movie coding. *IEEE Trans. Circuits Syst. Video Technol.,* 2004, vol. 14, 825-840

- **P. NDJIKI-NYA et al.** Improved H.264 coding using texture analysis and synthesis. *Proc Icip,* 2003, vol. 3, 849-852